# EUROPÄISCHE PATENTANMELDUNG

(11) **EP 1 714 548 A1**
(43) Veröffentlichungstag der Anmeldung: **25.10.2006**
(21) Anmeldenummer: 05010382.9
(22) Anmeldetag: 12.05.2005
(51) Int. Cl.: A01K 15/02, A47G 33/12

(54) **Kratzbaumwandhalter**

(30) Priorität: 01.04.2005 DE 202005005174 U
(71) Anmelder: Rosenau, Mirko, 06679 Muschwitz OT Göthewitz (DE)
(72) Erfinder: Rosenau, Mirko, 06679 Muschwitz OT Göthewitz (DE)

(57) **Zusammenfassung**

Kratzbaumwandhalter mit variabel einstellbarem Ausleger 2, welcher mit der Wandbefestigung 3 an der Wand, und der Schelle 1 am Kratzbaum befestigt wird.
Die Querstrebe 4 dient der Stabilisierung der V-förmigen Wandbefestigung 3.

Durch eine Liegeplatte 6 welche auf der Wandbefestigung 3 angebracht ist entsteht ein zusätzlicher Liegeplatz für die Katze.

Dieser Kratzbaumwandhalter ermöglich es in sehr hohen Räumen einen Katzenkratzbaum sicher aufzubauen.

## Beschreibung

Es gibt viele Leute, welche sich gerne ein großen Kratzbaum für Ihre Katzen zulegen möchten. Jedoch ist öfter der Fall, das die Raumhöhe zu groß ist. Eine Nutzung ist hier nicht mehr möglich, da der Kratzbaum nicht mehr verspannt werden kann.

Mit der Erfindung des Kratzbaumwandhalters ist es jetzt möglich auch bei zu hohen Decken den Kratzbaum zu befestigen. Die Deckenhöhe spielt jetzt keine Rolle mehr.

Der Kratzbaum wird mittels des Kratzbaumwandhalters direkt an der Wand befestigt.

Ein wichtiger Aspekt hierbei war, die hohe Hebelwirkung des Kratzbaumes abzufangen. Dies wurde gelöst, indem der Kratzbaumwandhalter eine breite Wandaufsatzfläche bekam.

Ein weiterer Punkt war, den Kratzbaumwandhalter so zu entwerfen, das er für alle Kratzbaum-Modelle nutzbar ist. Dies wurde erreicht, indem der Wandausleger in der Länge variabel ist.

Der im Schutzanspruch 1 angegebenen Erfindung liegt das Problem zugrunde, eine Befestigung von Kratzbäumen dort zu ermöglichen, wo es die Raumhöhe oder der Deckenzustand nicht mehr hergibt.

Dieses Problem wird mit dem in Schutzanspruch 1 aufgeführten Merkmalen gelöst.

Eine vorteilhafte Ausgestaltung der Erfindung ist in Schutzanspruch 3 - dargestellt.
Die variable Auslegerlänge ermöglicht es jedes Modell anzupassen, ordentlich und leicht zu befestigen.

Ein Ausführungsbeispiel der Erfindung wird anhand der Figuren 1-3 erläutert. Es zeigen:
Fig. 1 Kratzbaumwandhalter mit eingefahren Ausleger
Fig. 2 Kratzbaumwandhalter mit ausgefahren Ausleger
Fig.3 Draufsicht mit angebrachter Liegefläche

In den Figuren ist der Kratzbaumwandhalter mit Schelle 1, Ausleger 2, V-förmige Wandbefestigung 3, Querstrebe zur Stabilisierung 4, Wandbefestigung 5, und Liegeplatte 6 dargestellt.
Die Schelle 1 dient der Befestigung am Katzenkratzbaum, mit dem Ausleger 2 wird die Entfernung des Kratzbaumes zur Wand eingestellt, die V-förmig verlaufende Wandbefestigung 3 und die Wandbefestigung 5 dienen zur sicheren Befestigung an der Wand.
Mit Liegeplatte 6 wird eine zusätzliche Liegemöglichkeit für Haustiere geschaffen.

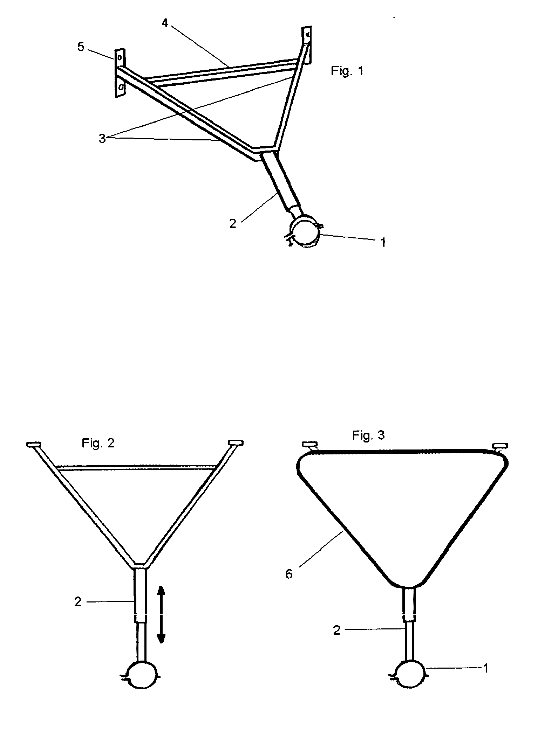

Bei ausgefahrenen Ausleger (Fig. 2) wird die Entfernung zur Wand mit dem Ausleger 2 variabel von ca. 20 cm bis ca. 75 cm eingestellt.

Figur 3 zeigt den Kratzbaumwandhalter mit darauf befestigter Liegeplatte 6.

## Patentansprüche

1. Wandhalterung zur Befestigung von Katzenkratzbäumen an der Wand,
**dadurch gekennzeichnet, dass** eine stabile Verbindung zwischen Kratzbaum und Wand entsteht.

2. Wandbefestigung nach Anspruch 1,
**dadurch gekennzeichnet, dass** Sie zwei Ausleger 3 die an der Wand befestigt werden aufweist, und V-förmig vom Kratzbaum zur Wand verläuft, und zusätzlich durch eine quer verlaufende Strebe 4 stabilisiert wird.

3. Ausleger nach einem der vorhergehenden Ansprüche,
**dadurch gekennzeichnet, dass** der Ausleger 2 in der Länge variabel, von ca. 20 bis maximal ca. 75 cm einstellbar ist, vorzugsweise ca. 40 cm ist.

4. Ausleger nach einem der vorhergehenden Ansprüche,
**dadurch gekennzeichnet, dass** an dem Ausleger 3 ,vorzugsweise an der Oberseite, eine Liegeplatte 6 angebracht ist.

5. Stammbefestigung nach einem der vorhergehenden Ansprüche,
**dadurch gekennzeichnet, dass** eine Schelle 1 mit einem Durchmesser von ca. 8 cm bis ca. 15 cm den Kratzbaum am Stamm befestigt.
